# EUROPÄISCHE PATENTSCHRIFT

(11) **EP 1 355 775 B1**
(45) Veröffentlichungstag und Bekanntmachung des Hinweises auf die Patenterteilung: **17.09.2008**
(21) Anmeldenummer: 02719719.3
(22) Anmeldetag: 24.01.2002
(51) Int. Cl.: B29C 45/50

(54) **REGELVERFAHREN FÜR DIE HYDRAULISCHE UNTERSTÜTZUNG EINES ELEKTRISCHEN ANTRIEBS**
REGULATION METHOD FOR THE HYDRAULIC SUPPORT OF AN ELECTRIC DRIVE
PROCEDE DE REGULATION D'ASSISTANCE HYDRAULIQUE D'UNE COMMANDE ELECTRIQUE

(30) Priorität: 31.01.2001 DE 10104109
(43) Veröffentlichungstag der Anmeldung: 29.10.2003
(73) Patentinhaber: Bosch Rexroth AG, 70184 Stuttgart (DE)
(72) Erfinder: DANTLGRABER, Jörg, 97816 Lohr am Main (DE)
(86) Internationale Anmeldenummer: PCT/EP2002/000678
(87) Internationale Veröffentlichungsnummer: WO 2002/064345

(56) Entgegenhaltungen:
- EP-A- 0 508 277
- EP-A- 0 760 277
- DE-A- 3 937 099
- US-A- 5 381 702
- PATENT ABSTRACTS OF JAPAN vol. 1999, no. 10, 31. August 1999 (1999-08-31) -& JP 11 138597 A (NISSEI PLASTICS IND CO), 25. Mai 1999 (1999-05-25)
- PATENT ABSTRACTS OF JAPAN vol. 16, no. 416 (M-1304), 2. September 1992 (1992-09-02) -& JP 04 141408 A (TOYO MACH & METAL CO LTD), 14. Mai 1992 (1992-05-14)

## Beschreibung

Die Erfindung betrifft ein Regelverfahren für die hydraulische Unterstützung eines elektrischen Antriebs für ein axial verfahrbares Maschinenteil in einer Spritzgießmaschine gemäß dem Oberbegriff des Anspruchs 1.

Aus der EP 0 760 277 B1 ist ein elektrischer Antrieb mit hydraulischer Unterstützung und ein Regelverfahren für einen derartigen Antrieb bekannt. Der Antrieb ist insbesondere für den Schneckenvortrieb einer Spritzgießmaschine vorgesehen. Ein Elektromotor bewegt eine Schnecke über ein mechanisches Getriebe, bei dem ein von dem Elektromotor angetriebenes Zahnrad in eine Zahnstange eingreift, in axialer Richtung. Da das Getriebe nur eine begrenzte Kraft von dem Elektromotor auf die Zahnstange übertragen kann, wird die Bewegung der Schnecke durch den Kolben eines hydraulischen Zylinders unterstützt. Die Beaufschlagung des Kolbens mit Druckmittel erfolgt aus einem Druckspeicher, der durch eine von dem Elektromotor angetriebene Pumpe versorgt wird. Ein Wegeventil steuert dabei die dem Zylinder zugeführte Druckmittelmenge. Die auf die Schnecke wirkende Kraft besteht aus zwei sich überlagernden Anteilen, einem ersten Kaftanteil, den der Elektromotor aufbring, und einem zweiten Kraftanteil, den der Kolben aufbringt. Zu dem verwendeten Regelverfahren ist ausgeführt, daß die Beaufschlagung des Kolbens mit Druckmittel beim Erreichen einer definierten Regelgröße erfolgt, die einem festgelegten Belastungszustand des Elektromotors entspricht, wobei der Druckanstieg im Zylinder proportional zur Lastaufnahme des Elektromotors ist. Die Lastaufnahme kann dabei direkt am Elektromotor gemessen werden, z. B. durch Messung der Stromaufnahme, die ein Maß für das Drehmoment ist. Als weiteres Signal für die Regelung des Druckmittelkreislaufs ist der Istwert der Vortriebsgeschwindigkeit der Schnecke genannt, die mit der Sollgeschwindigkeit verglichen werden soll. Alternativ hierzu ist als weiteres Signal für die Regelung des Druckmittelkreislaufs der Istwert des Drucks in der Einspritzdüse genannt, der in der Nachdruckphase mit dem Solldruck verglichen werden soll. Das Drucksignal kann z. B. durch eine Kraftmessung im Verbindungsbereich von Schnecke und Zahnstange bestimmt werden. Da bei dem bekannten Regelverfahren der Druckanstieg im Zylinder so gesteuert werden soll, daß er proportional zur Lastaufnahme des Elektromotors ist, wenn ein definierter Wert überschritten worden ist, ist davon auszugehen, daß der Druckanstieg im Zylinder proportional zu einen Anstieg der Lastaufnahme des Elektromotors erfolgt. Ob und gegebenenfalls wie dafür gesorgt wird, daß dabei der von dem Elektromotor aufgebrachte Kraftanteil den maximal zulässigen Wert, der von dem Getriebe übertragen werden kann, nicht übersteigt, ist in der Druckschrift nicht angegeben.

Der Erfindung liegt die Aufgabe zugrunde, ein Regelverfahren der eingangs genannten Art anzugeben, bei dem eine zuverlässige Begrenzung des von dem Elektromotor aufgebrachten Kraftanteils erfolgt.

Diese Aufgabe wird durch die im Anspruch 1 gekennzeichneten Merkmale gelöst. Das erfindungsgemäße Regelverfahren erlaubt es, die von dem Elektromotor aufgebrachte Kraft nicht größer als den maximal zulässigen Wert werden zu lassen, der von dem Getriebe übertragen werden kann. Dies ist möglich, da als Istwerte für den Regelvorgang einerseits die gesamte auf das axial verschiebbare Maschinenteil ausgeübte Kraft und andererseits die von dem Kolben auf das Maschinenteil ausgeübte Kraft verwendet werden.

Vorteilhafte Weiterbildungen der Erfindung sind in den Unteransprüchen gekennzeichnet. Die Erfindung erlaubt es, den Elektromotor entweder in Abhängigkeit von der Regeldifferenz für die Summe der Kraftanteile von Elektromotor und Kolben anzusteuern oder aber in Abhängigkeit von der Regeldifferenz für den Kraftanteil des Kolbens. Die Ansteuerung des Kolbens mit hydraulischem Druckmittel erfolgt in Abhängigkeit von der jeweils anderen Regeldifferenz. Wird bei einer Ansteuerung des Elektromotors in Abhängigkeit von der Regeldifferenz für die in axialer Richtung auf das Maschinenteil wirkenden Kraft, d. h. der Summe der Kraftanteile von Elektromotor und Kolben, die zeitliche Ableitung ihres Sollwerts der Regeldifferenz für die auf den Kolben wirkende Kraft im Sinne einer Führungsgrößenaufschaltung überlagert, läßt sich das Führungsverhalten verbessern. Ist der Sollwert für die auf das Maschinenteil wirkende Kraft kleiner als der zulässige Wert des Kraftanteils der von dem Getriebe übertragen wird, ist es vorteilhaft, die Kraftbeaufschlagung des in axialer Richtung verschiebbaren Maschinenteils nur durch den Elektromotor erfolgen zu lassen. Hierzu wird der Sollwert für die auf den Kolben wirkende Kraft in diesem Bereich gleich Null gesetzt.

Die Erfindung wird im folgenden mit ihren weiteren Einzelheiten anhand von in den Zeichnungen dargestellten Ausführungsbeispielen näher erläutert. Es zeigen
- Figur 1: das Blockschaltbild einer ersten Einrichtung zur Durchführung des erfindungsgemäßen Regelverfahrens in schematischer Darstellung,
- Figur 2: das Blockschaltbild einer zweiten Einrichtung zur Durchführung des erfindungsgemäßen Regelverfahrens in schematischer Darstellung und
- Figur 3: einen hydraulischen Zylinder mit einem Kolben, der von einem Elektromotor über einen Gewindetrieb bewegt wird.

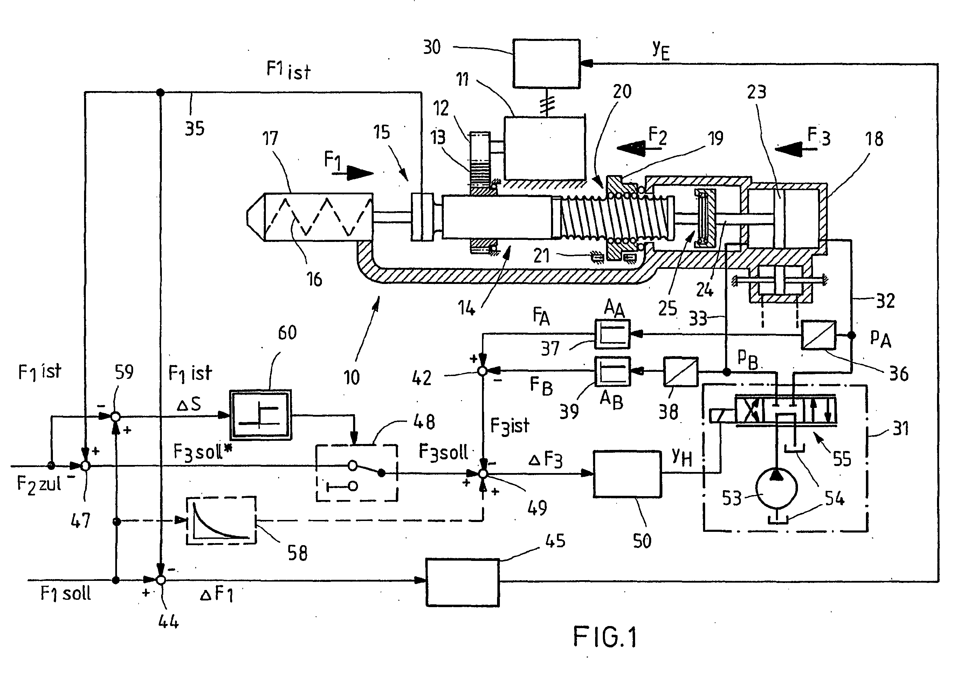

Die Figur 1 zeigt in schematischer Darstellung das Einspritzaggregat einer Spritzgießmaschine, das mit dem Bezugszeichen 10 versehen ist. Während des Plastifizierens dreht ein Elektromotor 11 über Zahnräder 12, 13 und eine Antriebswelle 14 sowie einen Freilauf 15 eine Schnecke 16 in einem Schneckenzylinder 17. Der linke Bereich der Antriebswelle 14, in den das Zahnrad 13 eingreift, ist als Zahnwelle ausgebildet. Die Schnecke 16 ist in axialer Richtung verfahrbar ausgebildet. Der plastifizierte Kunststoff befindet sich im Mündungsbereich des Schneckenzylinders 17. Die Schnecke 16 wird von dem plastifizierten Kunststoff gegen die Antriebswelle 14 gedrückt, die sich an einem hydraulischen Zylinder 18 abstützt.

Zum Einspritzen wechselt der Elektromotor 11 die Drehrichtung. Der Freilauf 15 entkuppelt aufgrund der Drehrichtungsumkehr die Schnecke 16 von der Antriebswelle 14. Die Schnecke 16 wird somit nicht mehr gedreht, sie bleibt jedoch weiterhin in axialer Richtung verschiebbar. Der rechte Bereich der Antriebswelle 14 bildet zusammen mit einer Mutter 19 einen Kugelgewindetrieb 20. Eine Bremse 21 hält während des Einspritzvorgangs die Mutter 19 fest. Der Elektromotor 11 dreht die Antriebswelle 14 gegenüber der Mutter 19, so daß sich die Antriebswelle 14 nach links verschiebt. Der Kugelgewindetrieb 20 übt dabei eine in axialer Richtung auf die Antriebswelle 14 wirkende Kraft F2 aus, die nach links gerichtet ist. In dem Zylinder 18 ist ein Kolben 23 geführt, der über eine Kolbenstange 24 und eine Drehkupplung 25 mit dem rechten Bereich der Antriebswelle 14 verbunden ist. Die Kolbenstange 24 drückt mit einer Kraft F3, die wie die Kraft F2 nach links gerichtet ist, gegen die Antriebswelle 14. Die Kraft F3 ist durch die druckbeaufschlagten Flächen des Kolbens 23 und die auf diese Flächen wirkenden Drücke bestimmt. Der plastifizierte Kunststoff, der sich in dem Schneckenzylinder 17 vor der Schnecke 16 befindet, übt beim Einspritzen eine nach rechts gerichtete Kraft F1 auf die Antriebswelle 14 aus, die gleich der Summe der Kräfte F2 und F3 ist. Die von dem Zylinder 18 auf die Antriebswelle 14 ausgeübte Kraft F3 ist der von dem Kugelgewindetrieb 20 auf die Antriebswelle 14 ausgeübten Kraft F2 überlagert und entlastet den Kugelgewindetrieb 20, wenn die Kraft F1 einen Wert F2_{zul} überschreitet, der durch die mechanische Belastbarkeit des Kugelgewindetriebs 20 bestimmt ist.

Als Stellglied für die Kraft F2 dient der Elektromotor 11. Ein Frequenzumrichter 30 steuert die Drehzahl des Elektromotors 11 in Abhängigkeit von einer elektrischen Stellgröße y_{E}. Als Stellglied für die Kraft F3 dient der Zylinder 18. Eine hydraulische Steuereinrichtung 31 beaufschlagt den Zylinder 18 über hydraulische Leitungen 32 und 33 in Abhängigkeit von einer elektrischen Stellgröße y_{H} mit Druckmittel. In dem Freilauf 15 ist ein nicht näher dargestellter Kraftmeßumformer angeordnet, der die Kraft F1 in ein elektrisches Signal F1ᵢₛₜ umformt. Dieses Signal steht auf einer Leitung 35 an. Es dient für die weitere Signalverarbeitung als Istwert der Kraft F1. Die Kraft F3 wird aus den Drücken, mit denen die Flächen des Kolbens 23 beaufschlagt sind, und aus der Größe dieser Flächen ermittelt. Die bodenseitige Fläche des Kolbens 23 ist mit AA bezeichnet, sie ist mit dem Druck pA beaufschlagt. Die stangenseitige Fläche des Kolbens 23 ist mit AB bezeichnet, sie ist mit dem Druck pB beaufschlagt. Der Druck pA in der Leitung 32 wird von einem ersten Druckmeßumformer 36 in ein elektrisches Signal umgeformt. Dieses Signal wird von einem ersten P-Glied 37 mit einem Faktor AA multipliziert. Das Ausgangssignal des P-Glieds 37 entspricht der auf die bodenseitige Fläche des Kolbens 23 wirkenden Kraft FA. Der Druck pB in der Leitung 33 wird von einem zweiten Druckmeßumformer 38 in ein weiteres elektrisches Signal umgeformt. Dieses Signal wird von einem zweiten P-Glied 39 mit einem Faktor AB multipliziert. Das Ausgangssignal des P-Glieds 39 entspricht der auf die stangenseitige Fläche des Kolbens 23 wirkenden Kraft FB. Ein Summierglied 42 bildet aus der Differenz der Signale FA und FB ein Signal F3ᵢₛₜ, das der von dem Kolben 23 auf die Antriebswelle 14 ausgeübten Kraft F3 entspricht. Das Signal F3ᵢₛₜ dient für die weitere Signalverarbeitung als Istwert der Kraft F3.

Der Regeleinrichtung für die auf die Antriebswelle 14 wirkenden Kräfte sind als Eingangsgrößen das Signal F1ₛₒₗₗ als Sollwert für die Kraft F1 und das Signal F2_{zul} als Sollwert für die von dem Kugelgewindetrieb 20 aufzubringende Kraft F2 zugeführt.

In einem Summierglied 44 wird aus den Signalen F1ₛₒₗₗ und F1ᵢₛₜ eine Regeldifferenz ΔF1 gebildet. Die Regeldifferenz ΔF1 ist einem Regler 45 zugeführt. Das Ausgangssignal des Reglers 45 ist dem Frequenzumrichter 30, der die Drehzahl des Elektromotors 11 verstellt, als Stellgröße y_{E} zugeführt. Der Regler 45 ändert in Abhängigkeit von der Regeldifferenz ΔF1 die Drehzahl des Elektromotors 11 so lange, bis die Regeldifferenz ΔF1 zu Null geworden ist. Das bedeutet, daß die Summe der Kräfte F2 und F3 im eingeschwungenen Zustand gleich dem Sollwert F1ₛₒₗₗ ist, sagt jedoch noch nichts über die Anteile der Kräfte F2 und F3 an der Kraft F1 aus.

Für die Aufteilung der Kräfte F2 und F3 ist ein weiterer Regelkreis vorgesehen. Die Führungsgröße dieses Regelkreises ergibt.sich aus dem Istwert F1ᵢₛₜ der Kraft F1 und dem Signal F2_{zul}, das die mechanische Belastbarkeit des Kugelgewindetriebs 20 berücksichtigt. Ein Summierglied 47 bildet aus den Signalen F1ᵢₛₜ und F2_{zul} ein Differenzsignal F3ₛₒₗₗ*. Dieses Signal ist über einen Umschalter 48 einem weiteren Summierglied 49 als Sollwert F3ₛₒₗₗ für die von dem Zylinder 18 aufzubringende Kraft F3 zugeführt. Das Summierglied 49 bildet aus den Signalen F3ₛₒₗₗ und F3ᵢₛₜ eine Regeldifferenz ΔF3, die dem Regler 50 zugeführt ist. Das Ausgangssignal des Reglers 50 ist der Steuereinrichtung 31 als Stellgröße y_{H} zugeführt. Die Steuereinrichtung 31 enthält eine Pumpe 53, die hydraulisches Druckmittel aus einem Tank 54 fördert. Ein Proportionalwegeventil 55, dem die Stellgröße y_{H} als Eingangssignal zugeführt ist, steuert den Druckmittelfluß zu dem Zylinder 18. Der Regler 50 ändert in Abhängigkeit von der Regeldifferenz ΔF3 die dem Zylinder 18 zugeführte Druckmittelmenge und damit die auf die Antriebswelle 14 wirkende Kraft F3 so lange, bis die Regeldifferenz ΔF3 im eingeschwungenen Zustand zu Null geworden ist. Da einerseits, wenn die Regeldifferenz ΔF1 zu Null geworden ist, die Summe der Kräfte F2 und F3 gleich F1ₛₒₗₗ ist und andererseits, wenn die Regeldifferenz ΔF3 zu Null geworden ist, die Kraft F3 gleich F3ₛₒₗₗ ist, ist die von dem Kugelgewindetrieb 20 auf die Antriebswelle 14 ausgeübte Kraft F2 gleich F2_{zul}. Dies bedeutet, daß die Kraft F2 im eingeschwungenen Zustand unabhängig von der Größe von F1ₛₒₗₗ gleich F2_{zul} ist. Damit ist sichergestellt, daß die Kraft F2, die über den Kugelgewindetrieb 20 auf die Antriebswelle 14 wirkt, den Wert F2_{zul} nicht übersteigt.

Zur Verbesserung des Führungsverhaltens der Regeleinrichtung ist das Signal F1ₛₒₗₗ einem Differenzierglied 58 zugeführt. Das Ausgangssignal des Differenzierglieds 58 ist dem Summierglied 49 als weiteres Eingangssignal zugeführt. Bei einer Änderung von F1ₛₒₗₗ erfolgt daher bereits eine Änderung von F3, bevor sich die Änderung von F1ₛₒₗₗ über die entsprechende Änderung des Signals F1ᵢₛₜ ausgewirkt hat. Alternativ hierzu ist es auch möglich, dem Summierglied 49 anstelle des Ausgangssignals des Differenzierglieds 58 ein entsprechendes Vorhaltsignal einer in den Zeichnungen nicht dargestellten übergeordneten Maschinensteuerung, die die Signale F1ₛₒₗₗ und F2_{zul} vorgibt, zuzuführen.

Damit in den Fällen, in denen F1ₛₒₗₗ kleiner als F2_{zul} ist, auf den Kolben 23 keine Kraft wirkt, die der Kraft F2 entgegengerichtet ist, ist der Umschalter 48 vorgesehen, der in seiner unteren Stellung den Sollwerteingang des Summierglieds 49 mit Bezugspotential verbindet, d. h. das Signal F3ₛₒₗₗ wird auf Null gesetzt. In dieser Stellung des Umschalters 48 steuert der Regler 50 die dem Kolben 18 zugeführte Druckmittelmenge so, daß die Kraft F3 im eingeschwungenen Zustand gleich Null ist. Der Kolben 18 übt somit keine Kraft auf die Antriebswelle 14 aus. In der oberen Stellung des Umschalters 48 ist dem Summierglied 49 - wie oben bereits beschrieben - das Signal F3ₛₒₗₗ* als Sollwert F3ₛₒₗₗ für die Kraft F3 zugeführt. Die Umschaltung zwischen den beiden Schaltstellungen des Umschalters 48 erfolgt in Abhängigkeit von der Differenz F1ₛₒₗₗ - F2_{zul}, die von.einem weiteren Summierglied 59 gebildet wird. Die mit ΔS bezeichnete Differenz ist einem Schaltglied 60 zugeführt, dessen Ausgangssignal den Umschalter 48 derart betätigt, daß F3ₛₒₗₗ bei negativen Werte der Differenz ΔS gleich Null ist und bei positiven Werten der Differenz ΔS gleich F3ₛₒₗₗ* ist. Ist das Signal F1ₛₒₗₗ kleiner als das Signal F2_{zul} oder gleich groß wie dieses, wird die Antriebswelle 14 nur mit der Kraft F2 beaufschlagt, wobei die Kraft F2 gleich dem durch das Signal F1ₛₒₗₗ vorgegebenen Wert ist. Erst wenn das Signal F1ₛₒₗₗ größer als das Signal F2_{zul} ist, wird die Antriebswelle 14 mit der Summe der Kräfte F2 und F3 beaufschlagt, wobei einerseits F2 gleich dem durch das Signal F2_{zul} vorgegebenen Wert und andererseits die Summe von F2 und F3 gleich dem durch das Signal F1ₛₒₗₗ vorgegebenen Wert ist.

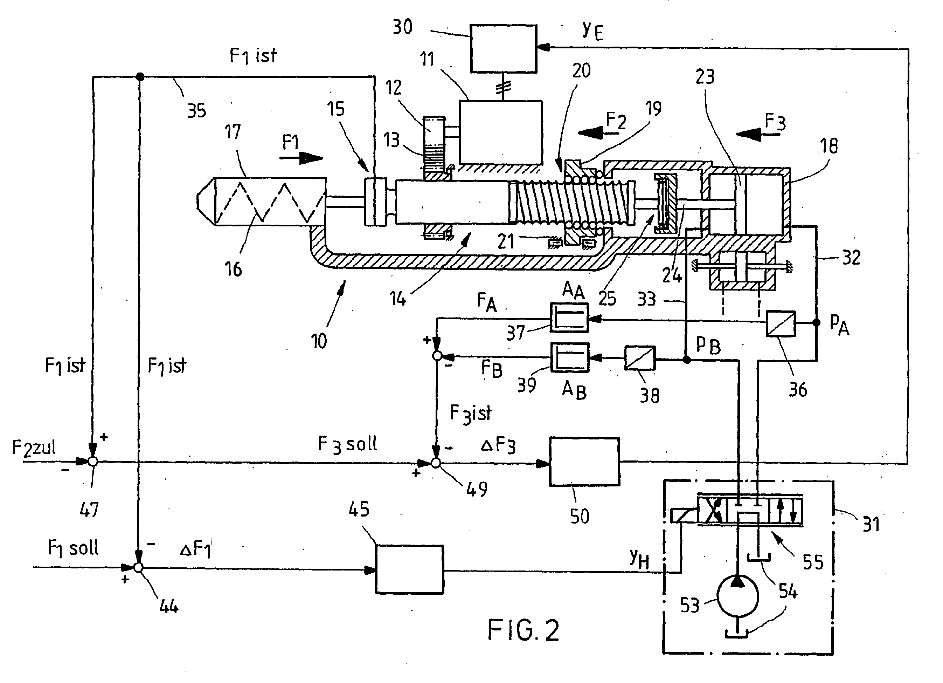

Die Figur 2 zeigt das bereits anhand der Figur 1 beschriebene Einspritzaggregat 10 einer Spritzgießmaschine zusammen mit dem Blockschaltbild einer zweiten Einrichtung zur Regelung der auf die Antriebswelle 14 wirkenden Kräfte F2 und F3 entsprechend den von einer übergeordneten Maschinensteuerung vorgegebenen Signalen F1ₛₒₗₗ und F2_{zul}. Wie bereits im Zusammenhang mit der Figur 1 beschrieben, wird die Summe der Kräfte F2 und F3 von dem in dem Freilauf 15 angeordneten Kraftmeßumformer gemessen und in das Signal F1ᵢₛₜ umgeformt. Die Kraft F3 wird aus den Drücken pA und pB ermittelt und unter Berücksichtigung der Größe der von diesen Drücken beaufschlagten Flächen AA bzw. AB des Kolbens 23 zu dem Signal F3ᵢₛₜ, dem Istwert der Kraft F3, verknüpft. Die Kraft F2, die der Kugelgewindetrieb 20 auf die Antriebswelle 14 ausübt, wird auch in diesem Ausführungsbeispiel nicht gemessen. Wie ebenfalls bereits im Zusammenhang mit der Figur 1 beschrieben, bildet das Summierglied 44 aus dem Sollwert F1ₛₒₗₗ für die Summe der auf die Antriebswelle 14 wirkenden Kräfte F2 und F3 und aus deren Istwert F1ᵢₛₜ die Regeldifferenz ΔF1, die dem Regler 45 zugeführt ist. Das Summierglied 47 bildet aus den Signalen F1ᵢₛₜ und F2_{zul} den Sollwert F3ₛₒₗₗ für die Kraft F3, die der Kolben 23 auf die Antriebswelle 14 ausübt.

Das Summierglied 49 bildet aus dem Sollwert F3ₛₒₗₗ für die Kraft F3 und aus deren Istwert F3ᵢₛₜ die Regeldifferenz ΔF3, die dem Regler 50 zugeführt ist. Anders als bei der in der Figur 1 dargestellten Regeleinrichtung ist das Ausgangssignal des Reglers 45 der hydraulischen Steuereinrichtung 31 als Stellgröße y_{H} zugeführt. Der Regler 45 verstellt die Kraft F3 in Abhängigkeit von der ihm zugeführten Regeldifferenz ΔF1 so lange, bis das Signal F1ᵢₛₜ, das ein Maß für die Summe der Kräfte F2 und F3 ist, im eingeschwungenen Zustand gleich dem Signal F1ₛₒₗₗ geworden ist. Die Regelung der Summe der Kräfte F2 und F3 erfolgt hier durch Verstellen der Kraft F3. Das Ausgangssignal des Reglers 50 ist dem Frequenzumrichter 30 als Stellgröße y_{E} zugeführt. Der Frequenzumrichter 30 steuert die Drehzahl des Elektromotors 11 und damit die über den Kugelgewindetrieb 20 auf die Antriebswelle 14 ausgeübte Kraft F2. Der Regler 50 verstellt die Kraft F2 in Abhängigkeit von der Regeldifferenz ΔF3 so lange, bis das Signal F3ᵢₛₜ im eingeschwungenen Zustand gleich dem Signal F3ₛₒₗₗ geworden ist. Der eingeschwungene Zustand ist erreicht, wenn die Regeldifferenz ΔF1 des einen Regelkreises und die Regeldifferenz ΔF3 des anderen Regelkreises zu Null geworden sind. Damit ist sowohl die Summe der Kräfte F2 und F3 gleich dem durch das Signal F1ₛₒₗₗ vorgegebenen Wert als auch die Kraft F3, die von dem Kolben 23 auf die Antriebswelle 14 ausgeübt wird, gleich der durch das Signal F3ₛₒₗₗ vorgegebenen Wert. Dies bedeutet aber auch, daß die Kraft F2 den durch das Signal F2_{zul} vorgegebenen Wert angenommen hat. Damit ist sichergestellt, daß die Kraft F2, die über den Kugelgewindetrieb 20 auf die Antriebswelle 14 wirkt, den durch das Signal F2_{zul} vorgegebenen Wert nicht übersteigt.

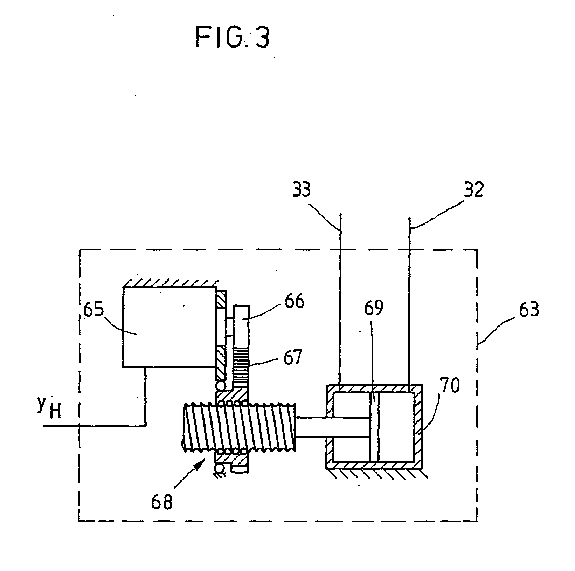

Die Figur 3 zeigt eine hydraulische Steuereinrichtung 63, die anstelle der in den Figuren 1 und 2 dargestellten hydraulischen Steuereinrichtung 31 einsetzbar ist. Das elektrische Steuersignal y_{H} ist einem Elektromotor 65 zugeführt, dessen Drehbewegung über Zahnräder 66 und 67 sowie einen Kugelgewindetrieb 68 in eine Längsbewegung umgesetzt wird. Der Kugelgewindetrieb 68 verschiebt einen Kolben 69 in einem Zylinder 70. Die Kammern des Zylinders 70 sind über die hydraulischen Leitungen 32 und 33 mit den entsprechenden Kammern des Zylinders 18 in den Figuren 1 und 2 verbunden. Bewegt der Elektromotor 65 den Kolben 69 des Zylinders 70 nach rechts, fließt Druckmittel aus der bodenseitigen Kammer des Zylinders 70 über die Leitung 32 in die bodenseitige Kammer des Zylinders 18 und verschiebt den Kolben 23 nach links. Das dabei aus der stangenseitigen Kammer des Kolbens 18 verdrängte Druckmittel fließt über die Leitung 33 in die stangenseitige Kammer des Kolbens 70. Durch entsprechende Wahl der Größe der druckbeaufschlagten Flächen der Kolben 23 und 69 läßt sich zusätzlich eine Kraftübersetzung zwischen der auf den Kolben 69 wirkenden Kraft und der von dem Kolben 23 auf die Antriebswelle 14 ausgeübten Kraft F3 erreichen.

Anstelle des Kugelgewindetriebs 20, der die Drehbewegung des Elektromotors 11 in eine Längsbewegung umsetzt, kann auch ein Rollengewindetrieb eingesetzt werden. Die Umsetzung der Drehbewegung des Elektromotors 11 in eine Längsbewegung kann aber auch durch ein von dem Elektromotor 11 angetriebenes Zahnrad erfolgen, das in eine Zahnstange eingreift und die Zahnstange in Längsrichtung bewegt. In gleicher Weise ist es möglich, den Kugelgewindetrieb 68 durch einen Rollengewindetrieb zu ersetzen oder die Drehbewegung des Elektromotors 65 über eine Zahnstange und ein in diese eingreifendes, von dem Elektromotor 65 angetriebenes Zahnrad in eine Längsbewegung umzusetzen.

## Patentansprüche

1. Regelverfahren für die hydraulische Unterstützung eines elektrischen Antriebs für ein axial verfahrbares Maschinenteil in einer Spritzgießmaschine, insbesondere für den Schneckenvortrieb beim Einspritzvorgang und/oder in der Nachdruckphase, mit einem Elektromotor, der über ein Getriebe eine axiale Bewegung des Maschinenteils bewirkt, und mit einem mit hydraulischem Druckmittel beaufschlagbaren, in einem Zylinder verschiebbaren Kolben, dessen Bewegung der durch den Elektromotor erzeugten axialen Bewegung des Maschinenteils überlagerbar ist, **dadurch gekennzeichnet,**
- **daß** aus dem Sollwert (F1ₛₒₗₗ) für.die in axialer Richtung auf das Maschinenteil (16) wirkende Kraft (F1) und dem Istwert (F1ᵢₛₜ) dieser Kraft (F1) eine Regeldifferenz (ΔF1) gebildet wird, die die Summe der auf das Maschinenteil (16) in axialer Richtung wirkenden Kraftanteile (F2, F3) steuert,
- **daß** aus dem Istwert (F1ᵢₛₜ) der in axialer Richtung auf das Maschinenteil (16) wirkenden Kraft (F1) und einem die mechanische Belastbarkeit des Getriebes (20) berücksichtigenden Wert (F2_{zul}) ein Sollwert (F3ₛₒₗₗ) für die in axialer Richtung auf den Kolben (23) wirkende Kraft (F3) gebildet wird und
- **daß** aus dem Sollwert (F3ₛₒₗₗ) für die in axialer Richtung auf den Kolben (23) wirkende Kraft (F3) und dem Istwert (F3ᵢₛₜ) dieser Kraft (F3) eine Regeldifferenz (ΔF3) gebildet wird, die einen der auf das Maschinenteil (16) in axialer Richtung wirkenden Kraftanteile (F2, F3) steuert.

2. Regelverfahren nach Anspruch 1, **dadurch gekennzeichnet,**
- **daß** der Elektromotor (11) entsprechend der Regeldifferenz (ΔF1) zwischen dem Sollwert (F1ₛₒₗₗ) für die in axialer Richtung auf das Maschinenteil (16) wirkende Kraft (F1) und dem Istwert (F1ᵢₛₜ) dieser Kraft (F1) im Sinne einer Verringerung der Differenz (ΔF1) angesteuert wird und
- **daß** der Kolben (23) entsprechend der Regeldifferenz (ΔF3) zwischen dem Sollwert (F3ₛₒₗₗ) für die in axialer Richtung auf den Kolben (23) wirkende Kraft (F3) und dem Istwert (F3ᵢₛₜ) dieser Kraft (F3) im Sinne einer Verringerung der Regeldifferenz (ΔF3) mit Druckmittel beaufschlagt wird.

3. Regelverfahren nach Anspruch 1, **dadurch gekennzeichnet,**
- **daß** der Kolben (23) entsprechend der Differenz (ΔF1) zwischen dem Sollwert (F1ₛₒₗₗ) für die in axialer Richtung auf das Maschinenteil (16) wirkende Kraft (F1) und dem Istwert (F1ᵢₛₜ) dieser Kraft (F1) im Sinne einer Verringerung der Differenz (ΔF1) mit Druckmittel beaufschlagt wird und
- **daß** der Elektromotor (11) entsprechend der Differenz (ΔF3) zwischen dem Sollwert (F3ₛₒₗₗ) für die in axialer Richtung auf den Kolben (23) wirkende Kraft (F3) und dem Istwert (F3ᵢₛₜ) dieser Kraft (F3) im Sinne einer Verringerung der Differenz (ΔF3) angesteuert wird.

4. Regelverfahren nach Anspruch 2, **dadurch gekennzeichnet, daß** die zeitliche Ableitung (dF1ₛₒₗₗ/dt) des Sollwerts (F1ₛₒₗₗ) für die in axialer Richtung auf das Maschinenteil (16) wirkende Kraft (F1) dem Sollwert (F3ₛₒₗₗ) für die in axialer Richtung auf den Kolben (23) wirkende Kraft (F3) im Sinne einer Führungsgrößenaufschaltung überlagert wird.

5. Regelverfahren nach einem der vorhergehenden Ansprüche, **dadurch gekennzeichnet, daß** der Sollwert (F3ₛₒₗₗ) für die in axialer Richtung auf den Kolben (23) wirkende Kraft (F3) gleich null gesetzt wird, wenn der Sollwert (F1ₛₒₗₗ) für die in axialer Richtung auf das Maschinenteil (16) wirkende Kraft (F1) kleiner als der die mechanische Belastbarkeit des Getriebes (20) berücksichtigende Wert (F2_{zul}) ist.

6. Regelverfahren nach einem der vorhergehenden Ansprüche, **dadurch gekennzeichnet, daß** die in axialer Richtung auf das Maschinenteil (16) wirkende Kraft (F1ᵢₛₜ) durch einen Kraftsensor gemessen wird, der in dem Kraftfluß zwischen dem Maschinenteil (16) und dem Getriebe (20) angeordnet ist.

7. Regelverfahren nach einem der vorhergehenden Ansprüche, **dadurch gekennzeichnet, daß** die in axialer Richtung auf den Kolben (23) wirkende Kraft (F3) aus den auf die Flächen (AA, AB) des Kolbens (23) wirkenden Drücken (pA, pB) ermittelt wird.

## Claims

1. A control method for the hydraulic assistance of an electric drive for an axially displaceable machine part in an injection moulding machine, in particular for the screw advance during the injection operation and/or in the holding phase, having an electric motor which effects an axial movement of the machine part via a transmission, and having a piston to which hydraulic pressure medium can be applied, which can be displaced in a cylinder and whose movement can be superimposed on the axial movement of the machine part produced by the electric motor, **characterized by the fact that**
- the desired value (F1ₛₒₗₗ) for the force (F1) acting on the machine part (16) in the axial direction, and the actual value (F1ᵢₛₜ) of this force (F1) are used to form a control difference (ΔF1), which controls the sum of the force components (F2, F3) acting on the machine part (16) in the axial direction,
- that the actual value (F1ᵢₛₜ) of the force (F1) acting on the machine part (16) in the axial direction, and a value (F2_{zul}) taking into account the mechanical load-bearing ability of the transmission (20) are used to form a desired value (F3ₛₒₗₗ) for the force (F3) acting on the piston (23) in the axial direction,
- and that the desired value (F3ₛₒₗₗ) for the force (F3) acting on the piston (23) in the axial direction, and the actual value (F3ᵢₛₜ) of this force (F3) are used to form a control difference (ΔF3), which controls one of the force components (F2, F3) acting on the machine part (16) in the axial direction.

2. A control method according to claim 1, **characterized by the fact that**
- the electric motor (11) is driven in accordance with the control difference (ΔF1) between the desired value (F1ₛₒₗₗ) for the force (F1) acting on the machine part (16) in the axial direction and the actual value (F1ᵢₛₜ) of this force (F1), with the effect of reducing the difference (ΔF1),
- and that the piston (23) is acted on with pressure medium in accordance with the control difference (ΔF3) between the desired value (F3ₛₒₗₗ) for the force (F3) acting on the piston (23) in the axial direction and the actual value (F3ᵢₛₜ) of this force (F3), with the effect of reducing the control difference (ΔF3).

3. A control method according to claim 1, **characterized by the fact that**
- the piston (23) is acted on with pressure medium in accordance with the difference (ΔF1) between the desired value (F1ₛₒₗₗ) for the force (F1) acting on the machine part (16) in the axial direction and the actual value (F1ᵢₛₜ) of this force (F1), with the effect of reducing the difference (ΔF1),
- and that the electric motor (11) is driven in accordance with the difference (ΔF3) between the desired value (F3ₛₒₗₗ) for the force (F3) acting on the piston (23) in the axial direction and the actual value (F3ᵢₛₜ) of this force (F3), with the effect of reducing the difference (ΔF3).

4. A control method according to claim 2, **characterized by the fact that** the time derivative (dF1ₛₒₗₗ/dt) of the desired value (F1ₛₒₗₗ) for the force (F1) acting on the machine part (16) in the axial direction is superimposed on the desired value (F3ₛₒₗₗ) of the force (F3) acting on the piston (23) in the axial direction, with the effect of control variable feedforward.

5. A control method according to any of the preceding claims, **characterized by the fact that** the desired value (F3ₛₒₗₗ) for the force (F3) acting on the piston (23) in the axial direction is set equal to zero if the desired value (F1ₛₒₗₗ) for the force (F1) acting on the machine part (16) in the axial direction is less than the value (F2_{zul}) which takes into account the mechanical load-bearing ability of the transmission (20).

6. A control method according to any of the preceding claims, **characterized by the fact that** the force (F1ᵢₛₜ) acting on the machine part (16) in the axial direction is measured by a force sensor which is arranged in the force flow between the machine part (16) and the transmission (20).

7. A control method according to any of the preceding claims, **characterized by the fact that** the force (F3) acting on the piston (23) in the axial direction is determined from the pressures (pA, pB) acting on the areas (AA, AB) of the piston (23).

## Revendications

1. Procédé d'asservissement pour l'assistance hydraulique de l'entraînement électrique d'un élément mécanique, qui peut coulisser en direction axiale dans une presse d'injection, en particulier pour l'avancée avec engrenage à vis sans fin au cours du processus d'injection et/ou pendant la phase de maintien en pression, doté d'un moteur électrique, qui cause un mouvement axial de l'élément mécanique à l'aide d'une transmission, et doté d'un piston, qui peut être sollicité par un fluide de pression hydraulique, qui peut coulisser dans un vérin et dont le mouvement peut être superposé au mouvement axial de l'élément mécanique produit par le moteur électrique, **caractérisé en ce**
- **qu**'à partir de la valeur (F1ₛₒₗₗ) de consigne de la force (F1) agissant en direction axiale sur l'élément (16) mécanique et de la valeur (F1ᵢₛₜ) réelle de cette force (F1) est calculée une différence de régulation (ΔF1), qui commande la somme des parts (F2, F3) de force agissant en direction axiale sur l'élément (16) mécanique,
- qu'à partir de la valeur (F1ᵢₛₜ) réelle de la force (F1) agissant sur l'élément (16) mécanique en direction axiale et d'une valeur (F2_{zul}), qui tient compte de la capacité de charge mécanique de la transmission (20), est calculée une valeur (F3ₛₒₗₗ) de consigne de la force (F3) agissant en direction axiale sur le piston (23), et
- qu'à partir de la valeur (F3ₛₒₗₗ) de consigne de la force (F3) agissant en direction axiale sur le piston (23) et de la valeur réelle (F3ᵢₛₜ) de cette force (F3) est calculée une différence (ΔF3) de régulation, qui commande des parts (F2, F3) de force agissant en direction axiale sur l'élément (16) mécanique.

2. Procédé d'asservissement selon la revendication n° 1, **caractérisé en ce**
- **qu**'en fonction de la différence (ΔF1) de régulation entre la valeur (F1ₛₒₗₗ) de consigne de la force (F1) agissant en direction axiale sur l'élément (16) mécanique et la valeur (F1ᵢₛₜ) réelle de cette force (F1), le moteur (11) électrique est commandé dans le sens d'une réduction de la différence (ΔF1) et
- qu'en fonction de la différence (ΔF3) de régulation entre la valeur (F3ₛₒₗₗ) de consigne de la force (F3) agissant en direction axiale sur le piston (23) et la valeur réelle (F3ᵢₛₜ) de cette force (F3), le piston (23) est sollicité par du fluide de pression dans le sens d'une réduction de la différence (ΔF3) de régulation.

3. Procédé d'asservissement selon la revendication n° 1, **caractérisé en ce**
- **qu**'en fonction de la différence (ΔF1) de régulation entre la valeur (F1ₛₒₗₗ) de consigne de la force (F1) agissant en direction axiale sur l'élément (16) mécanique et la valeur (F1ᵢₛₜ) réelle de cette force (F1), le piston (23) est sollicité par du fluide de pression dans le sens d'une réduction de la différence (ΔF1) et
- qu'en fonction de la différence (ΔF3) entre la valeur (Δ3ₛₒₗₗ) de consigne de la force (F3) agissant en direction axiale sur le piston (23) et la valeur (F3ᵢₛₜ) réelle de cette force (F3), le moteur (11) électrique est commandé dans le sens d'une réduction de la différence (ΔF3).

4. Procédé d'asservissement selon la revendication n° 2, **caractérisé en ce que** la dérivée (dF1ₛₒₗₗ/dt) par rapport au temps de la valeur (F1ₛₒₗₗ) de consigne de la force (F1) agissant en direction axiale sur l'élément (16) mécanique est superposée à la valeur (F3ₛₒₗₗ) de consigne de la force (F3) agissant en direction axiale sur le piston (23), dans le sens d'une combinaison avec la grandeur de commande.

5. Procédé d'asservissement selon une des revendications précédentes, **caractérisé en ce que** la valeur (F3ₛₒₗₗ) de consigne de la force (F3) agissant en direction axiale sur le piston (23) est mise à zéro, lorsque la valeur (F1ₛₒₗₗ) de consigne de la force (F1) agissant en direction axiale sur l'élément (16) mécanique est inférieure à la valeur (F2_{zul}), qui tient compte de la capacité de charge mécanique de la transmission (20).

6. Procédé d'asservissement selon une des revendications précédentes, **caractérisé en ce que** la force(F1ᵢₛₜ) agissant en direction axiale sur l'élément (16) mécanique est mesurée à l'aide d'un capteur de force, qui est disposé dans le flux de forces entre l'élément (16) mécanique et la transmission (20).

7. Procédé d'asservissement selon une des revendications précédentes, **caractérisé en ce que** la force (F3) agissant en direction axiale sur le piston (23) est produite par les pressions (pA, pB) agissant sur les surfaces (AA, AB) du piston (23).
